**Europäisches Patentamt**

**European Patent Office**

**Office européen des brevets**

(19)

(11) Veröffentlichungsnummer: **0 038 939**
**B1**

(12) **EUROPÄISCHE PATENTSCHRIFT**

(45) Veröffentlichungstag der Patentschrift:
25.01.84

(51) Int. Cl.³: **G 05 G 5/00**, **G 02 B 23/16**,
**G 02 B 23/08**, **B 23 Q 17/02**

(21) Anmeldenummer: 81102314.2

(22) Anmeldetag: 27.03.81

(54) **Vorrichtung zum Verriegeln eines entlang einer geraden Linie oder um eine Drehachse beweglichen Bauteils.**

(30) Priorität: 30.04.80 CH 3335/80

(43) Veröffentlichungstag der Anmeldung:
04.11.81 Patentblatt 81/44

(45) Bekanntmachung des Hinweises auf die Patenterteilung:
25.01.84 Patentblatt 84/4

(84) Benannte Vertragsstaaten:
AT BE CH DE FR GB IT LI NL SE

(56) Entgegenhaltungen:
DE - A - 1 578 279
DE - A - 1 948 046
DE - B - 1 268 934
FR - A - 2 096 311
FR - A - 2 420 405

(73) Patentinhaber: CONTRAVES AG,
Schaffhauserstrasse 580, CH-8052 Zürich (CH)

(72) Erfinder: Arndt, Klaus, Friedackerstrasse 37,
CH-8050 Zürich (CH)

Vorrichtung zum Verriegeln eines entlang einer geraden Linie
oder um eine Drehachse beweglichen Bauteils

Die Erfindung betrifft eine Vorrichtung zum Verriegeln eines entlang einer geraden Linie oder um eine Drehachse beweglichen Bauteils, insbesondere zum Verriegeln einer in einem Gehäuse drehbar gelagerten Antriebswelle, die für die Elevations- oder Azimutbewegung der Richteinheit eines Beobachtungsperiskopes vorgesehen und in vorbestimmter Stellung positionierbar ist.

Zur Arretierung der Höhenrichtbewegung eines Spiegels in einem Periskop ist eine Vorrichtung DE-B Nr. 2030735 bekannt, bei welcher ein die Höhenrichtbewegung ausführendes Bauteil zur Bestimmung der Visierlinie über eine in der gewünschten Endlage verriegelbare Welle verdrehbar ist. Die Verriegelung erfolgt im wesentlichen durch zwei, im Abstand zueinander, drehfest an der Welle angeordnete und scheibenartig ausgebildete Steuerteile sowie durch zwei weitere, an einer im Abstand zur Welle angeordneten Baueinheit befestigte und mittels eines Magneten hin- und herbewegliche Riegelorgane, die in der Riegelstellung mit den beiden Steuerteilen form- und kraftschlüssig verbunden sind. Diese Vorrichtung hat den Nachteil, dass bereits bei geringem Verschleiss der ineinandergreifenden Elemente die bei derartigen, optischen Geräten erforderliche Genauigkeit nicht mehr gewährleistet ist.

Zum Stand der Technik ist ferner eine Einrichtung zum Dämpfen und Begrenzen der Drehbewegung einer Trommel gemäss der DE-B Nr. 1268934 zu erwähnen. Bei dieser Einrichtung wird vor Beendigung der Drehbewegung ein an einem Körper durch einen Kolben oder dergleichen abgefedert gelagerter Schwingdaumen gegen einen am Umfang der Trommel angeordneten Anschlag geschwenkt, wobei zur genauen Einstellung der Lage der Trommel in ihre Arbeitsstellung die Trommel mit dem Anschlag gegen einen auslenkbar gelagerten Riegel gedrückt wird.

Der Erfindung liegt die Aufgabe zugrunde, eine Vorrichtung zum spielfreien Verriegeln von Bauteilen, insbesondere für eine mit einem optischen System versehene Antriebswelle für die Elevations- oder Azimutbewegung der Richteinheit eines Beobachtungsperiskops zu schaffen, bei welcher der erwähnte nachteilige Verschleiss an den Riegelorganen weitgehend vermieden, beziehungsweise kompensiert wird und welche zum Zweck der Justierung der optischen Achsen eine exakt reproduzierbare Nullstellung gewährleistet.

Diese Aufgabe wird gelöst durch ein erstes, als Hartlage ausgebildetes Riegelorgan und ein zweites, gegen die Rückstellkraft einer Feder verstellbares Riegelorgan sowie ein Anschlagelement, welches Anschlagelement in der vorbestimmten Stellung zwischen einem in die Bewegungsebene schwenkbaren Anschlag des ersten Riegelorgans und einem in die Bewegungsebene schwenkbaren Riegel des zweiten, durch die Rückstellkraft der Feder gegen das Anschlagelement wirkenden Riegelorgans spielfrei verriegelbar ist.

Die mit der erfindungsgemässen Vorrichtung erreichten Vorteile bestehen darin, dass die Antriebswelle in der vorbestimmten Nullstellung durch die konstante Anpresskraft der Feder spielfrei in die Hartlage gepresst wird, wobei Versuche gezeigt haben, dass ohne besonderen Aufwand eine Winkelreproduzierbarkeit von < 0,1 mrad erreichbar ist.

Weitere Merkmale der Erfindung ergeben sich aus der folgenden Beschreibung in Verbindung mit der Zeichnung und den Patentansprüchen.

Die Erfindung wird nachstehend anhand eines Ausführungsbeispiels in Verbindung mit der Zeichnung näher beschrieben.

Es zeigt:

Fig. 1 ein schematisch und teilweise im Schnitt dargestelltes Beobachtungsperiskop mit einer um die Elevationskippachse schwenkbaren und um die Azimutdrehachse drehbaren Richteinheit;

Fig. 2 einen im Schnitt und in grösserem Massstab dargestellten Ausschnitt der in Fig. 1 durch einen Kreis M bezeichneten Stelle mit der Vorrichtung zum Verriegeln der Antriebswelle für die Azimutdrehachse;

Fig. 3 die in grösserem Massstab und teilweise im Schnitt gemäss der Linie III-III in Fig. 2 dargestellte Vorrichtung in entriegeltem Zustand;

Fig. 4 die in Ansicht dargestellte Vorrichtung gemäss Fig. 3 mit der in verriegeltem Zustand dargestellten Antriebswelle, und

Fig. 5 ein im Schnitt dargestelltes Teilstück eines an der Antriebswelle befestigten Anschlagelements.

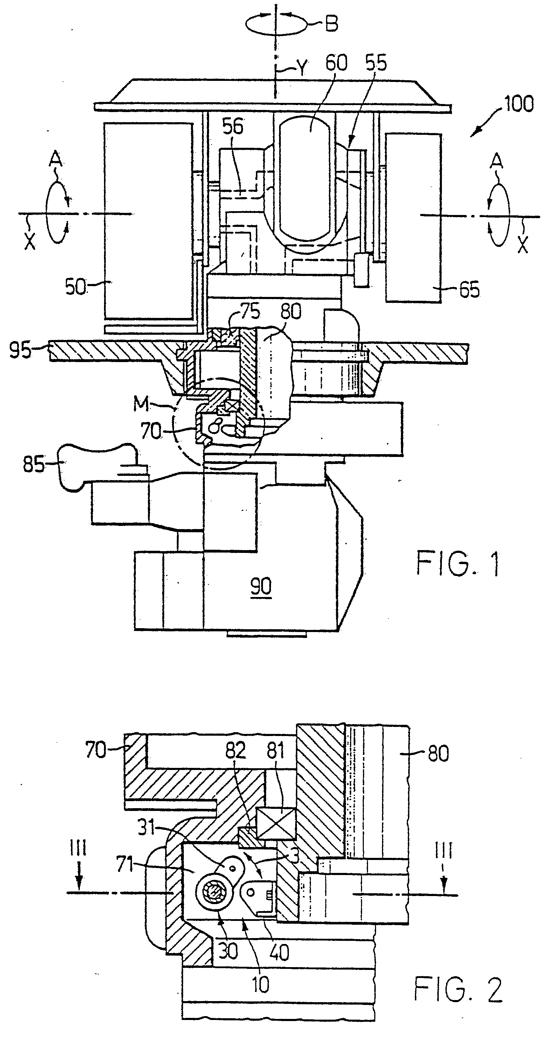

Fig. 1 zeigt ein schematisch und teilweise im Schnitt dargestelltes Beobachtungsperiskop 100, bestehend aus einer oberhalb einer Abdeckung 95, beispielsweise einer Panzerabdeckung, angeordneten Richteinheit sowie einer unterhalb der Abdeckung angeordneten Trägereinheit. Die Richteinheit umfasst im wesentlichen ein erstes Gehäuse 55 mit vorzugsweise integrierter Objektivvorrichtung 60, welche durch eine im Gehäuse 55 gelagerte und von einem nicht dargestellten Antriebsaggregat betätigte Antriebswelle 56 um die horizontale Elevationskippachse X-X in Pfeilrichtung A schwenkbar ist. Bei einem bevorzugten Ausführungsbeispiel des Periskopes 100 ist auf der einen Seite des Gehäuses 55 ein optischer Empfänger 50 und auf der anderen Seite des Gehäuses ein Entfernungsmesser 65 angeordnet und zusammen mit der Objektivvorrichtung 60 um die gemeinsame Kippachse X-X in Pfeilrichtung A schwenkbar.

Die unterhalb der Abdeckung 95 angeordnete Trägereinheit umfasst im wesentlichen ein zweites Gehäuse 70, eine in nicht näher dargestellter Weise mit der Richteinheit wirkverbundene und in dem Gehäuse 70 gelagerte Antriebswelle 80, eine schematisch dargestellte Okularvorrichtung 85 sowie eine Signaleinblendungseinrichtung 90. Ein in dem Gehäuse 70 angeordnetes und mit der Welle wirkverbundenes Antriebsaggregat 75 bewirkt im wesentlichen die Drehbewegung der oberhalb der Abdeckung angeordneten Richteinheit um die senkrechte Azimutdrehachse Y in Pfeilrichtung B.

Zum Ausrichten der Elevationskippachse X-X oder der Azimutdrehachse Y wird die entsprechende Antriebswelle 56 beziehungsweise 80 auf einen vorbestimmten Winkel in eine exakte und gut reproduzierbare Nullstellung positioniert, in welcher die Welle 80 mit dem Gehäuse 70 oder die Welle 56 mit dem Gehäuse 55 verriegelt wird. In Fig. 2 ist in grösserem Massstab der in Fig. 1 durch einen Kreis M bezeichnete Ausschnitt einer entsprechend ausgebildeten Vorrichtung 10 zum Verriegeln der Welle mit dem Gehäuse dargestellt und man erkennt das Gehäuse 70, ein durch einen Ring 82 gehaltenes Wälzlager 81, die Welle 80 sowie die in einer im Gehäuse vorgesehenen Tasche 71 angeordnete und in entriegeltem Zustand dargestellte Vorrichtung 10 zum Verriegeln der Welle.

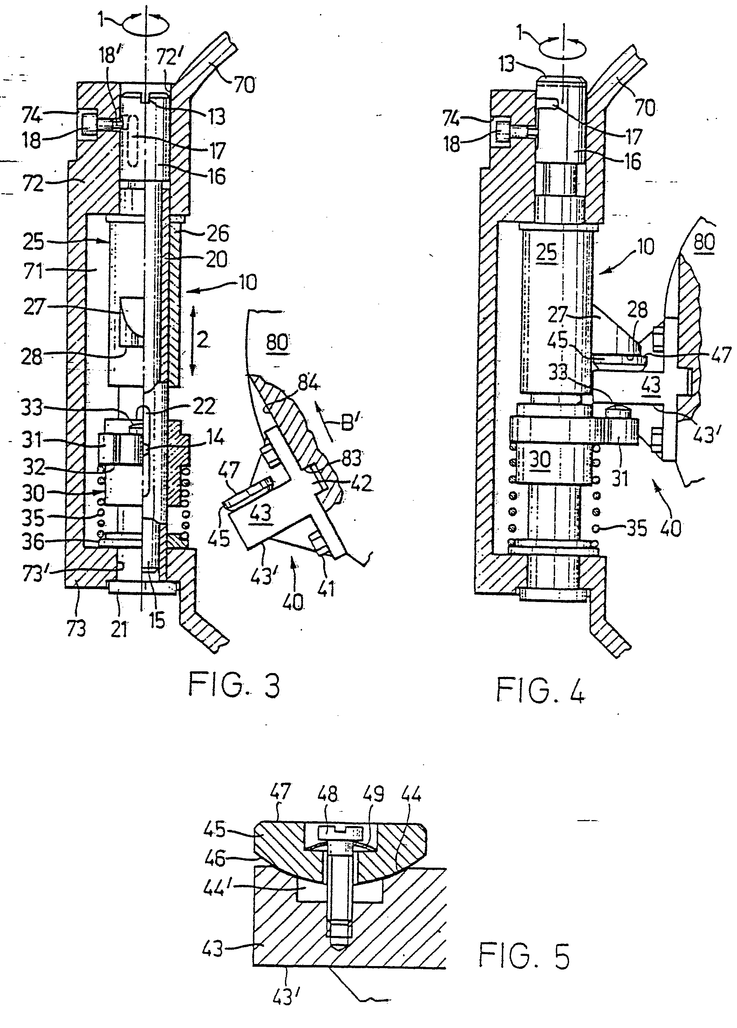

In Fig. 3 ist die in der Tasche 71 des Gehäuses 70 angeordnete Vorrichtung in grösserem Massstab und teilweise im Schnitt gemäss der Linie III-III in Fig. 2 in entriegeltem Zustand dargestellt. Zwischen zwei im Abstand zueinander angeordneten, mit Bohrungen 72', 73' versehenen Wänden 72, 73 des Gehäuses ist in den miteinander korrespondierenden Bohrungen eine Buchse 20 gelagert, welche auf der einen Seite durch eine mit nicht dargestellten Mitteln an der Wand 73 befestigte Scheibe 21 gehalten ist. In der Buchse 20 ist ein Bolzen 15 gelagert, welcher auf der einen Seite ein in der Bohrung 72' gelagertes und mit einem in radialer und axialer Richtung verlaufenden Winkelschlitz 17 versehenes Kopfstück 16 aufweist. Eine in einer Ausnehmung 74 der Wand 72 angeordnete und befestigte Schraube 18 greift mit einem Zapfenteil 18' in den Winkelschlitz 17. Der Bolzen 15 ist somit in einem durch den Winkelschlitz 17 vorbestimmten Bereich um die Längsachse des Bolzens in Pfeilrichtung 1 drehbar und in Pfeilrichtung 2 axial verschiebbar. Die Buchse 20 dient ausserdem zur Aufnahme und Lagerung von zwei im Abstand zueinander angeordneten Riegelorganen 25 und 30, welche nachstehend näher beschrieben werden.

Das erste an der Wand 72 anliegende und als Hülse 26 ausgebildete Riegelorgan 25 ist mit einem seitlich angeordneten, radial nach aussen gerichteten Anschlag 27 versehen und mit nicht näher dargestellten Mitteln an axialer und radialer Richtung mit der Buchse 20 wirkverbunden. Das zweite, ebenfalls als Hülse ausgebildete Riegelorgan 30 weist einen seitlich nach aussen gerichteten Riegel 31 auf und ist mittels einem im Bolzen 15 in nicht näher dargestellter Weise befestigten, die Buchse 20 durchdringenden und in einem in axialer Richtung verlaufenden Längsschlitz 22 geführten Zapfen 14 mit dem Bolzen 15 sowie der Buchse 20 wirkverbunden. In radialer Richtung gesehen ist im äusseren Bereich des Riegels 31 ein mit einem vorzugsweise kugelförmig ausgebildeten Kopfstück versehener Bolzen 33 angeordnet und mit nicht dargestellten Mitteln befestigt. Der mit einer ringförmigen Anlagekante 32 versehene Riegel 31 dient ferner als Anlage für eine Rückstellfeder 35, welche sich auf der anderen Seite vorzugsweise an eine an der Wand 73 anliegende Buchse 36 abstützt. In Fig. 3 ist ferner ein Teilstück der um die Azimutdrehachse Y in Pfeilrichtung B' drehbaren Antriebswelle 80 in einer noch nicht ganz in die Null- und Fixierstellung eingeschwenkten Position dargestellt. Seitlich an der mit einer Anlagefläche 84 versehenen Welle 80 ist ein Anschlagelement 40 angeordnet, welches mit einem Führungsteil 42 in einer in axialer Richtung verlaufenden Längsnut 83 der Welle geführt und gegen Verdrehung gesichert sowie mittels Schrauben 41 an der Welle befestigt ist. Das Anschlagelement 40 weist einen Steg 43 auf, an welchem auf der dem ersten Riegelorgan 25 zugewandten Seite ein Auflageteil 45 angeordnet und befestigt ist. In Fig. 5 ist in grösserem Massstab und im Schnitt das an dem Steg mittels einer Schraube 48 befestigte Auflageteil 45 dargestellt, und man erkennt das mit einer kugelförmig ausgebildeten Auflagefläche 46 in einer korrespondierend ausgebildeten Ausnehmung 44 des Stegs 43 gelagerte Auflageteil 45. Die Ausnehmung 44 weist eine ring- und kugelförmig ausgebildete Auflagefläche auf, an welche sich eine zylindrische Ausnehmung 44' anschliesst. Das Auflageteil 45 ist mittels der Schraube 48, welche durch ein Federelement, beispielsweise durch eine Tellerfeder 49 unter Federspannung steht, derart in der Ausnehmung 44 gelagert und an dem Steg 43 befestigt, dass eine geringe, allseitige Bewegung des Auflageteils innerhalb der Kugelfläche möglich ist.

Fig. 4 zeigt die in die Null- und Fixierstellung eingeschwenkte Welle 80 und man erkennt das erste Riegelorgan 25, welches mit der Anlagefläche 28 des Anschlages 27 an der Anlagefläche 47 des am Anschlagelement 40 befestigten Auflageteils 45 anliegt. Ferner erkennt man das zweite Riegelorgan 30, welches durch die Rückstellfeder 35 mit der kugelförmigen Kopffläche des am vorderen Ende des Riegels 31 angeordneten Bolzens 33 an der Anlagefläche 43' des Steges 43 anliegt.

Die Wirkungsweise der beschriebenen Vorrichtung ist folgende: Die beliebig wählbare Nullstellung der um die Längsachse in Pfeilrichtung B' drehbaren Welle 80 ist bei der Montage bestimmt worden und wird beispielsweise durch nicht näher dargestellte Mittel, wie Endschalter oder dergleichen, erreicht. Zum Verriegeln der in die Nullstellung eingeschwenkten Welle wird der Bolzen 15 mittels einem in den Schlitz 13 eingesteckten, nicht dargestellten Schraubenzieher oder dergleichen in Pfeilrichtung 1 gedreht, wodurch gleichzeitig die beiden im wesentlichen mit dem Bolzen wirkverbundenen Riegelorgane 25 und 30 um die Längsachse des Bolzens gedreht werden. In der in Fig. 4 dargestellten Position wird durch die Rückstellkraft der Feder 35 der Riegel 31 des Riegelorgans 30 mit dem Bolzen 33 gegen die Anlagefläche 43' des an der Welle 80 befestigten Anschlagelements 40 sowie das im Anschlagelement gelagerte Auflageteil 45 gegen die als Hartlage vorgesehene Fläche 28 des Anschlages 27 gepresst, wobei sich das in der Ausnehmung 44 gelagerte Auflageteil entsprechend der Fläche 28 des Anschlages 27 anpasst. Zum Entzurren der Welle wird durch Hineindrücken und Verdrehen des Bolzens 15 der Riegel 31 sowie der Anschlag 27 aus der Drehebene der Welle 80 herausgedreht. In der entzurrten Stellung ist der Bolzen durch die in den Winkelschlitz 17 eingreifende Schraube 18 gesichert. Durch die Kombination des Hartlageanschlages mit dem federnden Anschlag ist eine spielfreie und exakt reproduzierbare Nullstellung gewährleistet.

In Fig. 3 und Fig. 4 ist als Ausführungsbeispiel die Vorrichtung 10 zum Verriegeln der um ihre Längsachse drehbaren Welle eines optischen Gerätes, beispielsweise für die Antriebswelle der Elevationskippachse oder für die Antriebswelle der Azimutdrehachse eines Periskopes dargestellt und vorgehend ausführlich beschrieben. An dieser Stelle sei jedoch darauf hingewiesen, dass die genannte Vorrichtung auch zum spielfreien und exakt reproduzierbaren Verriegeln eines entlang einer geraden Linie bewegten und in eine Nullstellung positionierten Maschinenbauteils verwendet werden kann.

## Patentansprüche

1. Vorrichtung (10) zum Verriegeln eines entlang einer geraden Linie oder um eine Drehachse beweglichen Bauteils, insbesondere zum Verriegeln einer in einem Gehäuse (70) drehbar gelagerten Antriebswelle (80), die für die Elevations- oder Azimutbewegung der Richteinheit (110) eines Beobachtungsperiskopes (100) vorgesehen und in vorbestimmter Stellung positionierbar ist, gekennzeichnet durch ein erstes, als Hartlage ausgebildetes Riegelorgan (25) und ein zweites, gegen die Rückstellkraft einer Feder (35) verstellbares Riegelorgan (30) sowie ein Anschlagelement (40), welches Anschlagelement (40) in der vorbestimmten Stellung zwischen einem in die Bewegungsebene schwenkbaren Anschlag (27) des ersten Riegelorgans (25) und einem in die Bewegungsebene schwenkbaren Riegel (31) des zweiten, durch die Rückstellkraft der Feder (35) gegen das Anschlagelement (40) wirkenden Riegelorgans (30) spielfrei verriegelbar ist.

2. Vorrichtung nach Anspruch 1, dadurch gekennzeichnet, dass die beiden Riegelorgane (25, 30) auf einer zwischen zwei im Abstand zueinander angeordneten Wänden (72, 73) des Gehäuses (70) angeordneten Buchse (20) gelagert und derart mit der Buchse (20) sowie mit einem darin geführten Bolzen (15) wirkverbunden sind, dass das erste Riegelorgan (25) drehgesichert, unverschiebbar und das zweite Riegelorgan (30) drehgesichert aber in Bezug auf die Buchse (20) längsverschiebbar ist.

3. Vorrichtung nach Anspruch 2, dadurch gekennzeichnet, dass der Bolzen (15) auf der einen Seite ein in der Gehäusewand (72) gelagertes Kopfstück (16) mit in Umfangs- und in axialer Richtung orientiertem Winkelschlitz (17) aufweist, in welchem für eine begrenzte radiale Dreh- und axiale Schubbewegung des Bolzens (15) ein Zapfen (18') einer im Gehäuse (70) befestigten Schraube (18) geführt ist.

4. Vorrichtung nach Anspruch 1, dadurch gekennzeichnet, dass an dem Anschlagelement (40) an der dem ersten, als Hartlage ausgebildeten Riegelorgan (25) zugewandten Seite ein beim Verriegeln in Bezug auf die Fläche (28) des Anschlags (27) sich anpassendes Auflageteil (45) angeordnet ist.

5. Vorrichtung nach Anspruch 4, dadurch gekennzeichnet, dass das Auflageteil (45) mit einer kugelförmig ausgebildeten Auflagefläche (46) in einer korrespondierend ausgebildeten Ausnehmung (44) des Anschlagelements (40) gelagert und beweglich befestigt ist.

## Claims

1. Device (10) for locking a component which is movable along a straight line or round an axis of rotation, in particular for locking a drive shaft (80) mounted rotatably in a housing (70) which is provided for the elevational or azimuthal movement of the directional unit (110) of an observation periscope (100) and can be positioned in a predetermined position, characterised by a first locking bar part (25) which is formed as a fixed location and a second locking bar part (30) adjustable against the restoring force of a spring (35), and a stop element (40), which stop element (40) can be locked, free from play, in the predetermined position between a stop (27) of the first locking bar part (25) which is pivotable into the plane of motion, and a locking bar (31) of the second locking bar part (30) acting by means of the restoring force of the spring (35) against the stop element (40).

2. Device according to claim 1, characterised in that the two locking bar parts (25, 30) are mounted on a bushing (20) arranged between two walls (72, 73) of the housing (70) arranged at a distance from one another, and are operatively connected to the bushing (20) and to a pin (15) guided therein, in such a way that the first locking bar part (25) is mounted securely against rotation, non-displaceably, and the second locking bar part (30) is mounted securely against rotation but is longitudinally displaceable with respect to the bushing (20).

3. Device according to claim 2, characterised in that the pin (15) has on one side a head piece (16) mounted in the housing wall (72), with an angular slot (17) directed in the circumferential and in the axial direction, in which, for a limited radial rotational and axial thrust movement of the pin (15) there is guided a pin (18') of a screw (18) secured in the housing (70).

4. Device according to claim 1, characterised in that on the stop element (40) on the side turned towards the first locking bar part (25) formed as a fixed location there is arranged a support part (45) which adapts on locking with respect to the surface (28) of the stop (27).

5. Device according to claims 1 and 4, characterised in that the support part (45) is mounted with a spherically shaped support surface (46) in a correspondingly constructed recess (44) of the stop element (40) and is movably secured.

## Revendications

1. Dispositif (10) de blocage d'un organe mobile le long d'une droite ou autour d'un axe, notamment pour bloquer un arbre d'entraînement (80) monté à rotation dans un carter (70), prévu pour le mouvement d'élévation ou le mouvement azimutal de l'unité de pointage (110) d'un périscope d'observation (100) et pouvant être positionné dans une position prédéterminée, caractérisé par un premier organe de blocage (25) agencé pour une position dure et par un second organe de blocage (30) déplaçable contre la force de rappel d'un ressort (35) ainsi que par un élément de butée (40) qui peut être bloqué sans jeu dans la position prédéterminée entre une butée (27) du premier organe de blocage (25) pivotant dans le plan du mouvement et un verrou (31), pivotant dans le plan du mouvement, du second organe de blocage (30) agissant par la force de rappel du ressort (35) contre l'élément de butée (40).

2. Dispositif selon la revendication 1, caractérisé en ce que les deux organes de blocage (25, 30) sont montés sur une douille (20) disposée entre deux parois (72, 73) du carter (70) placées à distance l'une de l'autre et sont mis en liaison de fonctionnement avec la douille (20) ainsi qu'avec une cheville (15) guidée à l'intérieur, de sorte que le premier organe de blocage (25) est garanti contre la rotation sans pouvoir se déplacer et que le second organe de blocage (30) est garanti contre la rotation, mais peut se déplacer en direction longitudinale par rapport à la douille (20).

3. Dispositif selon la revendication 2, caractérisé en ce que la cheville (15) comporte d'un côté une pièce de tête (16) montée dans la paroi (72) du carter avec une fente coudée (17) orientée en direction périphérique et en direction axiale, fente dans laquelle est guidé un téton (18') d'une vis (18) fixée dans le carter (70) pour un mouvement limité de rotation radiale et de translation axiale de la cheville (15).

4. Dispositif selon la revendication 1, caractérisé en ce qu'une partie d'appui (45) est disposée sur l'élément de butée (40) du côté dirigé vers le premier organe de blocage (25) agencé pour une position dure, cette partie s'adaptant lors du blocage vis-à-vis de la surface (28) de la butée (27).

5. Dispositif selon les revendications 1 et 4, caractérisé en ce que la partie d'appui (45) est montée et maintenue de façon mobile par une surface d'appui (46) agencée avec une forme sphérique dans un évidement (44) de l'élément de butée (40) agencé de façon correspondante.

FIG. 1

FIG. 2

FIG. 3

FIG. 4

FIG. 5